# EUROPÄISCHE PATENTANMELDUNG

(11) **EP 1 939 461 A2**
(43) Veröffentlichungstag der Anmeldung: **02.07.2008**
(21) Anmeldenummer: 07123754.9
(22) Anmeldetag: 20.12.2007
(51) Int. Cl.: F15B 13/08, F15B 21/00, F16K 11/07

(54) **Modulares pneumatisches Schieberventil**

(30) Priorität: 27.12.2006 DE 102006062432
(71) Anmelder: ROBERT BOSCH GMBH, 70469 Stuttgart-Feuerbach (DE)
(72) Erfinder: Widera, Jörg, 70839, Gerlingen (DE)
(74) Vertreter: Kietzmann, Lutz

(57) **Zusammenfassung**

Modulares pneumatisches Schieberventil mit mindestens fünf, an einem Einheitsventilgehäuse (1) angeordneten äußeren Anschlüssen P, A, B, R, S, deren Druckluftverbindungen eine innenliegende über mindestens einen stirnseitigen Steuerdruckkolben (2a, 2b) axial bewegbare Ventilschieberanordnung schaltet, wobei zur Realisierung unterschiedlicher Ventilfunktionen die Ventilschieberanordnung aus zwei einzelnen Ventilschieberteilen (2a, 2b) besteht, die miteinander ungekoppelt 2x3/2- sowie 5/3-Ventilfunktionen umsetzen, wobei durch Kopplung mittels eines starren Verbindungselements (9) die beiden Ventilschieberteile (2a, 2b) 5/2-Ventilfunktionen umsetzen.

## Beschreibung

Die vorliegende Erfindung betrifft ein modulares pneumatisches Schieberventil mit mehreren an einem Einheitsventilgehäuse angeordneten äußeren Anschlüssen P, A, B, R und S, deren Druckluftverbindungen eine innenliegende über mindestens einen stirnseitigen Steuerdruckkolben axial bewegbare Ventilschieberanordnung schaltet.

Eine Ventilbaureihe pneumatischer Schieberventile umfasst gewöhnlich eine große Palette von unterschiedlichen Ventilfunktionen, welche je nach Kundenwunsch hiermit realisierbar sind. So sind in monostabiler und bistabiler Variante unter anderem 2x3/2-, 5/2- und 5/3-Ventilfunktionen erhältlich. Da innerhalb eines pneumatischen Systems eine Vielzahl einzelner Wegeventile mit ganz unterschiedlichen Ventilfunktionen erforderlich sind, werden diese gewöhnlich innerhalb einer kompakten Ventileinheit örtlich zusammengefasst angeordnet. Dies setzt in etwa gleiche Außenabmessungen der Ventilgehäuse voraus. Aus diesem Grunde werden Einheitsventilgehäuse verwendet, welche sich durch in etwa gleiche geometrische Gestalt sowie Anschlussschemata auszeichnen. Die hiermit realisierbaren modularen pneumatischen Schieberventile der hier interessierenden Art können über entsprechende Grundplattenelemente gemeinsame Speisedruck- und Entlüftungsanschlüsse nutzen.

Aus der DE 10 2005 003 982 A1 geht ein gattungsgemäßes modulares pneumatisches Schieberventil hervor. Dieses weist trotz verschiedener Varianten ein Einheitsventilgehäuse der vorstehend erläuterten Art auf. Am Einheitsventilgehäuse sind fünf Anschlüsse P, A, B, R und S angeordnet, wobei der Druckluftfluss zwischen diesen Anschlüssen mittels eines Ventilschiebers, welcher in einer korrespondierenden Schieberbohrung im Einheitsgehäuse axial verschiebbar angeordnet ist, geschaltet wird. Hierzu ist der Ventilschieber über mindestens einen an der Stirnseite angeordneten Steuerdruckkolben axial bewegbar, um verschiedene äußere Anschlüsse miteinander in Verbindung zu bringen. In einer monostabilen Variante ist am Ventilschieber nur ein Steuerdruckkolben vorgesehen, wogegen das gegenüberliegende Ende des Ventilschiebers mit einer Rückstellfeder beaufschlagt wird. In einer bistabilen Variante ist beidseits des Ventilschiebers je ein Steuerkolben vorgesehen, so dass eine Hin- und Herstellung des Ventilschiebers über wechselseitige Steuerdruckbeaufschlagung erfolgen kann. Im Sinne eines modularen Aufbaus werden bei dieser technischen Lösung sowohl gehäuseseitig als auch schieberseitig möglichst viele Gleichbauteile verwendet, was wegen der Minimierung der Einzelbauteile zur Umsetzung verschiedener Ventil funktionen den Fertigungsaufwand entsprechend senkt. Allerdings ist diese technische Lösung nur auf 5/2-Ventilfunktionen ausgerichtet.

Es ist daher die Aufgabe der vorliegenden Erfindung ein modulares pneumatisches Schieberventil der gattungsgemäßen Art zu schaffen, mit welchem unter Einsatz von gleichen Bauteilen möglichst viele Ventilfunktionen umsetzbar sind.

Die Aufgabe wird ausgehend von einem modularen pneumatischen Schieberventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zur Realisierung unterschiedlicher Ventilfunktionen der Ventilschieber aus zwei einzelnen Ventilschieberteilen besteht, die miteinander ungekoppelt 2x3/2- sowie 5/3-Ventilfunktionen umsetzen, wobei durch Kopplung mittels eines starren Verbindungselements die beiden Ventilschieberteile 5/2-Ventilfunktionen umsetzen.

Der Vorteil der erfindungsgemäßen Lösung liegt insbesondere darin, dass hinsichtlich der Ventilmechanik vornehmlich gleiche Bauteile zum Einsatz kommen. Im Hinblick auf die Ventilschieberteile ist jeweils nur eine Langbauweise und eine Kurzbauweise erforderlich. In weiterer Kombination mit dem starren, dazwischen liegenden Verbindungselement kann eine Vielzahl monostabiler und bistabiler Ventilfunktionen in NO (Normal Open) sowie NC (Normal Closed) umgesetzt werden.

Das optionale starre Verbindungselement ist vorzugsweise koaxial zu den beiden Ventilschieberteilen und lösbar zwischen deren einander zugewandten Stirnseiten angeordnet. Hierbei kann das Verbindungselement konstruktiv verschiedenartig ausgeführt werden. Vorzugsweise ist dieses nach Art einer Verbindungshülse gestaltet, welche sich in einfacher Weise auf korrespondierende Endabsätze seitens der Ventilschieberteile aufstecken lässt. Alternativ hierzu ist es auch möglich, das Verbindungselement nach Art eines Verbindungsstiftes auszubilden, der endseitig in korrespondierende Grundbohrungen seitens der Ventilschieberteile einsteckbar ist. Die Steckstelle kann bei Bedarf über eine Klebung oder dergleichen zusätzlich gesichert werden.

Gemäß einer weiteren die Erfindung verbessernde Maßnahme ist vorgesehen, dass beide Ventilschieberteile je über nur zwei Kontaktstellen innerhalb des Einheitsgehäuses geführt sind, nämlich steuerkolbenseitig über eine Steuerkolbendichtung und am gegenüberliegende Ende über eine Schieberdichtung. Hierdurch verhalten sich die einzelnen Ventilschieberteile für sich recht reibungsarm und die Anzahl der Dichtungen ist minimal. Aufgrund der geringen Reibung kann der Durchmesser der Steuerkolbens reduziert werden und es können in Ergebnis dessen recht schmalbauende Schieberventile mit großem relativen Durchfluss realisiert werden. Zudem sind Vorsteuerventile mit geringer pneumatischer Leistung ausreichend, welcher wiederum mit entsprechend geringer elektrischer Leistung ansteuerbar sind.

Die reibungsarme Ausführung der Ventilschieberteile wird vorzugsweise dadurch begünstigt, dass zum Schalten des Druckluftflusses zwischen den äußeren Anschlüssen A > R bzw. B > S die Ventilschieberteile mit dem Einheitsgehäuse je einen Sitzventil bilden. Soweit wird an dieser Stelle ein weiterer Ventilschieberdichtring entbehrlich. Das Sitzventil kann dabei durch einen rückwärtigen Abschnitt des Steuerkolbens gebildet werden, welcher vorzugsweise gänzlich aus einem elastomeren Dichtmaterial besteht und über eine außenradiale Lippendichtung die Steuerkammer begrenzt. Da nicht für alle Ventilfunktionen an der besagten Stelle Sitzventile erforderlich sind, lässt sich zur Abstimmung auf eine 2x3/2 NO/NO und dergleichen Ventilfunktion der Ventilsitz des betreffenden Sitzventils mit einem Durchlassring bestücken. Der Durchlassring besteht vorzugsweise aus einem ringförmigen Kunststoffkörper, der mit Radialschlitzen versehen ist, um einen permanenten Druckmitteldurchlass an dieser Stelle sicherzustellen. Alternativ hierzu ist es auch denkbar, den Durchlassring aus einem porösen Material herzustellen.

Gemäß einer anderen die Erfindung verbessernden Maßnahme wird vorgeschlagen, das Einheitsgehäuse über stirnseitige, austauschbare Enddeckel zu verschließen, an welchen innenseitig ein auf die jeweilige Ventil funktion abgestimmter Endlagenabschnitt angeformt ist, der mit je einem zugeordneten Ventilschieberteil steuerkolbenseitig zusammenwirkt. Somit kann auf verschiedene einzelne Endanschlagmittel verzichtet werden. Mit der axialen Länge des Endanschlags wird die Endposition des Ventilschiebers in der deckelseitigen Endlagenposition definiert.

Weitere die Erfindung verbessernde Maßnahmen, insbesondere im Hinblick auf konstruktive Ausführungen zur Umsetzung verschiedener Ventilfunktionen werden nachstehend gemeinsam mit der Beschreibung bevorzugter Ausführungsbeispiele der Erfindung anhand der Figuren näher dargstellt. Es zeigt:
- Figur 1: eine schematische Darstellung eines Schieberventils mit 2x3/2 NC/NC Ventilfunktion,
- Figur 2: eine schematische Darstellung eines Schieberventils mit 2x3/2 NO/NO Ventilfunktion,
- Figur 3: eine schematische Darstellung eines Schieberventils mit 2x3/2 NC/NO Ventilfunktion,
- Figur 4: eine schematische Darstellung eines Schieberventils mit 5/2 monostabil Ventilfunktion,
- Figur 5: eine schematische Darstellung eines Schieberventils mit 5/2 bistabil Ventilfunktion,
- Figur 6: eine schematische Darstellung eines Schieberventils mit 5/3 Ventilfunktion, wobei Entlüftung in Mittelstellung erfolgt, und
- Figur 7: eine schematische Darstellung eines Schieberventils mit 5/3 Ventilfunktion, wobei Belüftung in Mittelstellung erfolgt.

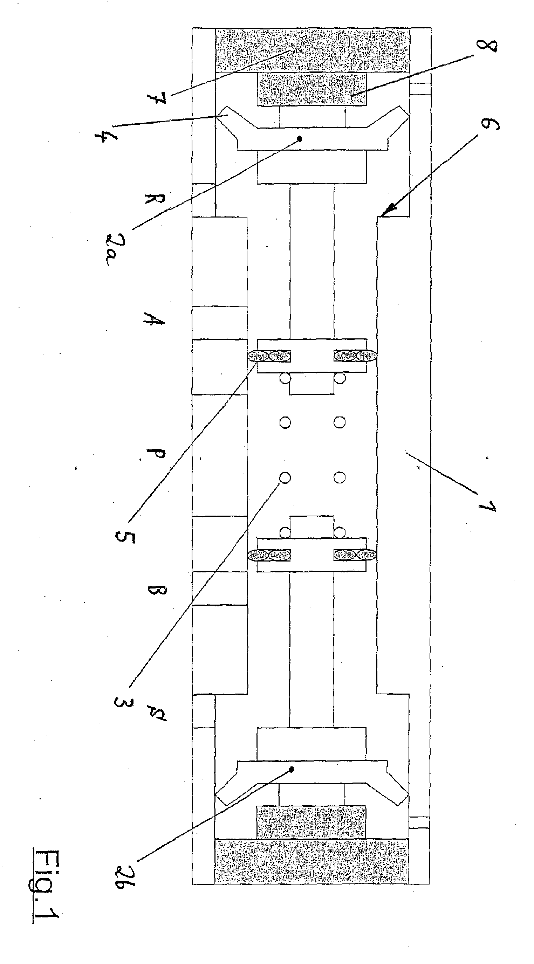

Gemäß Figur 1 besteht das pneumatische Schieberventil aus einem Einheitsventilgehäuse 1, an welchem unterseitig fünf äußere Anschlüsse P, A, B, R und S angeordnet sind, die eine Verbindung zum Ventilinneren herstellen, in welchem eine Ventilschieberanordnung axial bewegbar angeordnet ist. Die Ventilschieberanordnung besteht hier zur Realisierung einer 2x3/2 NC/NC Ventilfunktion aus zwei Ventilschieberteilen 2a und 2b in einer Langbauweise. Die beiden Ventilschieberteile 2a und 2b sind miteinander ungekoppelt, jedoch kraftmäßig zwecks Rückstellung mit einer zwischen den einander zugeordneten Stirnseiten angeordneten Rückstellfeder 3 verbunden. Jedes Ventilschieberteil (exemplarisch) 2a, ist über nur zwei Kontaktstellen innerhalb des Einheitsgehäuses 1 geführt. Steuerkolbenseitig erfolgt dies über eine Steuerkolbendichtung 4 und am gegenüberliegenden Ende ist das Ventilschieberteil 2a über eine Schieberdichtung 5 reibungsarm geführt. Zum Schalten Druckluftflusses zwischen den äußeren Anschlüssen A > R bildet das zugeordnete, exemplarische Ventilschieberteil 2a ein Sitzventil 6 in Verbindung mit dem Einheitsgehäuse 1. Insofern kann an dieser Schaltstelle auf eine reibungsbehaftete weitere Schieberdichtung verzichtet werden. Weiterhin ist das Einheitsventilgehäuse 1 über stirnseitige Enddeckel 7 (exemplarisch) verschließbar. Innenseitig ist am Deckel 7 ein auf die Ventilfunktion abgestimmter Endanschlagabschnitt 8 angeformt, der mit dem zugeordneten Ventilschieberteil 2a (exemplarisch) steuerkolbenseitig zusammenwirkt.

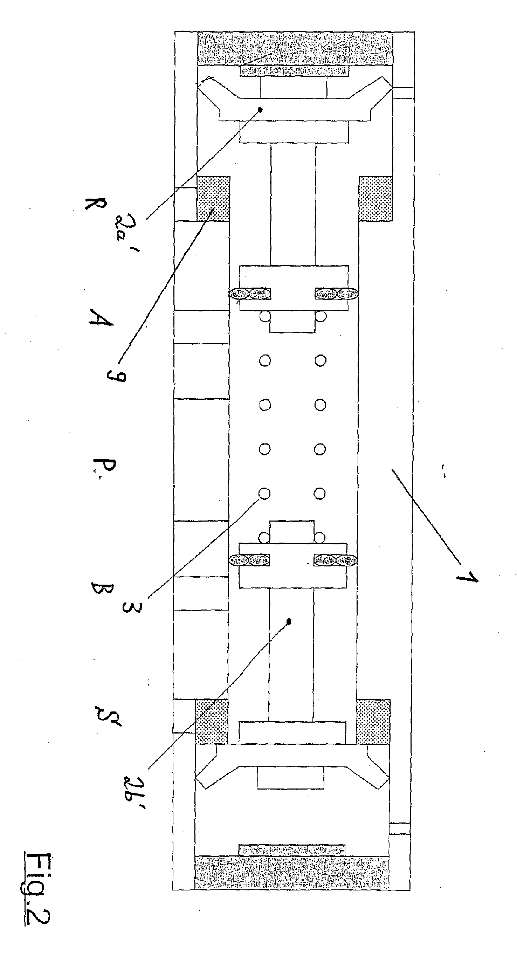

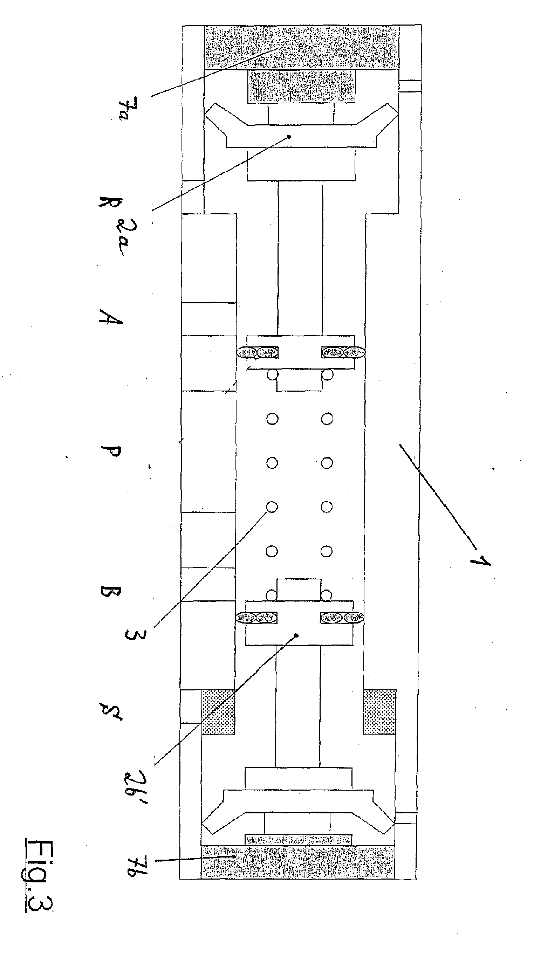

Nachfolgend wird anhand weiterer Ausführungsbeispiele die Realisierung anderer Ventilfunktionen beschrieben, wobei lediglich die Unterschiede zu dem vorstehend beschriebenen Ausführungsbeispiel des modularen Schieberventils erläutert werden:
Gemäß Figur 2 werden zur Realisierung einer 2x3/2 NO/NO Ventilfunktion zwei Ventilschieberteile 2a' und 2b' in Kurzbauweise eingesetzt. Beide Ventilschieberteile 2a' und 2b' befinden sich steuerkolbenseitig während der hier dargestellten Ruhelage in Endlagenposition. Zwischen den einander zugeordneten Stirnseiten beider Ventilschieberteile 2a' und 2b' ist eine Rückstellfeder 3 angeordnet. Anstelle eines steuerkolbenseitigen Sitzventils befindet sich hier stattdessen ein Durchlassring 9, welcher - wie exemplarisch im rechten Teil der Zeichnung gezeigt - eine Verbindung B > S herstellt.
Gemäß Figur 3 wird eine 2x3/2 NC/NO Ventilfunktion durch ein - linksseitig gezeigtes - Ventilschieberteil 2a in Langbauweise sowie ein - rechtsseitig gezeigtes - Ventilschieberteil 2b' in Kurzbauweise realisiert. Hier kommen in Kombination damit zwei unterschiedlich gestaltete Enddeckel 7a und 7b zum Einsatz, wobei der dem Ventilschieberteil 2a in Langbauweise zugeordnete Enddeckel 7a einen längeren Endanschlagabschnitt besitzt als der des anderen Enddeckels 7b, welcher dem Ventilschieberteil 2b' in Kurzbauweise zugeordnet ist. Zwischen den beiden Ventilschieberteilen 2a und 2b' befindet sich auch hier eine Rückstellfeder 3.

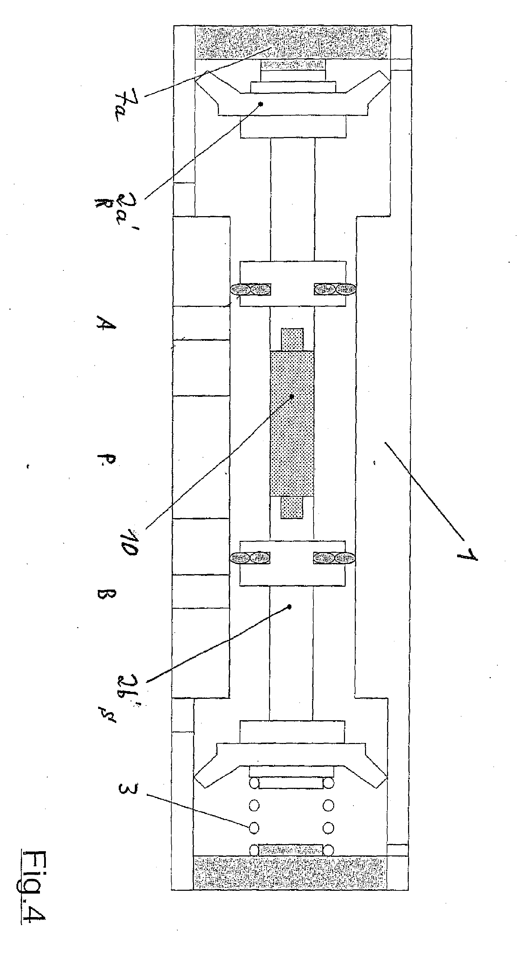

Nach dem in Figur 4 gezeigten Ausführungsbeispiel wird eine 5/2 monostabile Ventilfunktion umgesetzt, in dem beide Ventilschieberteile 2a' und 2b' in Kurzbauweise mit einem dazwischen angeordneten starren stiftförmigen Verbindungselement 10 gekoppelt sind. Zusätzlich ist steuerkolbenseitig eine Rückstellfeder 3 angeordnet, welche die monostabile Ventilfunktion gewährleistet. In Übereinstimmung hiermit befindet sich die Ventilschieberanordnung linksseitig während der Ruhelage in Anlage am Enddeckel 7a.

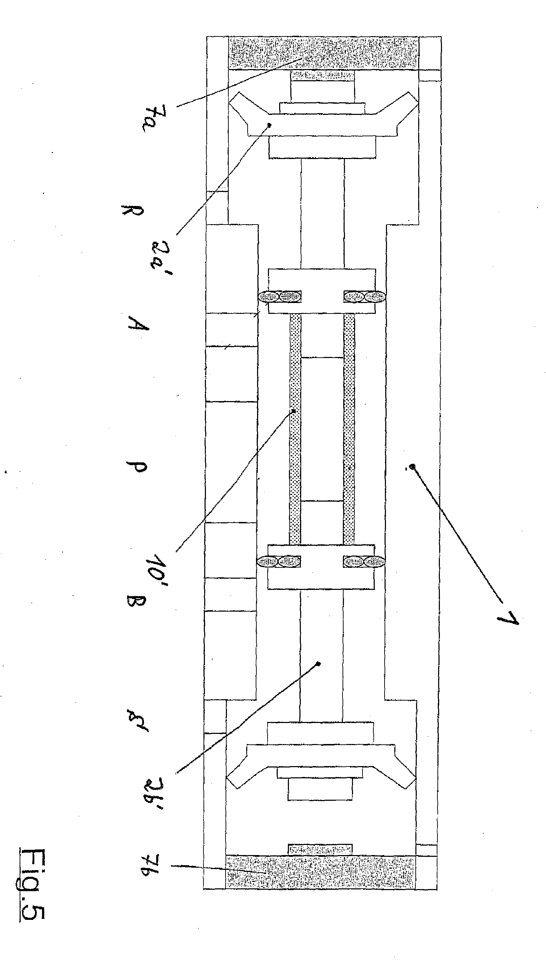

In Figur 5 ist die 5/2 Ventilfunktion in der bistabilen Variante gezeigt. Es entfällt im Gegensatz zum vorstehend beschriebenen Ausführungsbeispiel eine Rückstellfeder. Beide Ventilschieberteile 2a' und 2b' sind hier mit einem nach Art einer Verbindungshülse ausgestalteten Verbindungselement 10' gekoppelt.

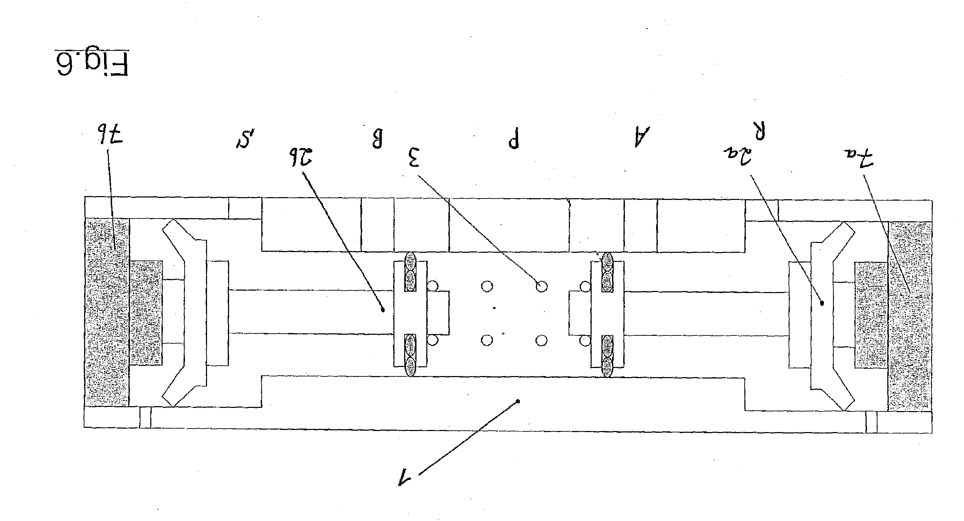

Gemäß Figur 6 werden zur Realisierung eine 5/3 Ventilfunktion mit Entlüftung in Schiebermittelstellung zwei Ventilschieberteile 2a und 2b in Langbauweise verwendet, die sich während der Ruhelage ersichtlicherweise in Endlagenposition befinden, also in Anlage mit den jeweils zugeordneten Enddeckeln 7a bzw. 7b sind. Zwischen den beiden Ventilschieberteilen 2a und 2b ist auch hier eine Rückstellfeder 3 vorgesehen.

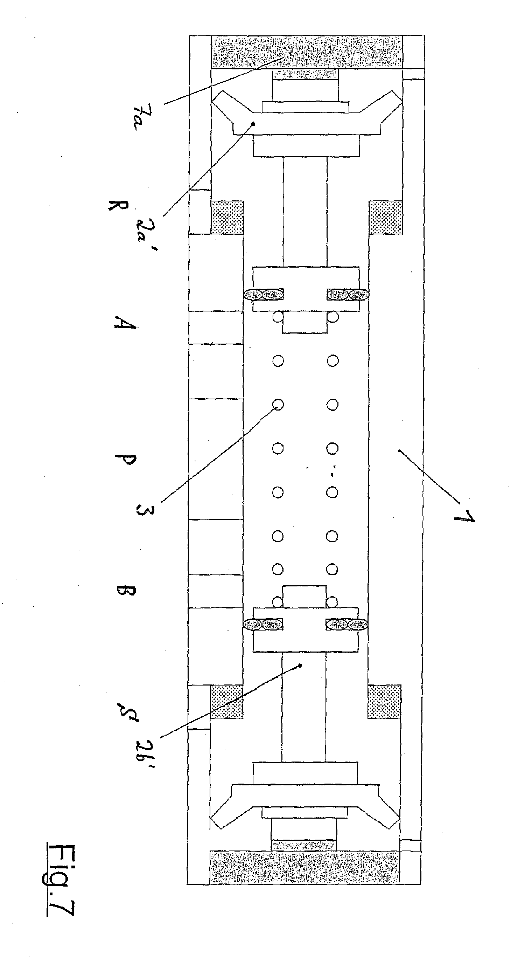

Gemäß Figur 7 werden zur Umsetzung einer 5/3 Ventilfunktion mit Belüftung in Schiebermittelstellung zwei Ventilschieberteile 2a' und 2b' in Kurzbauweise verwendet, die während der Ruhelage jeweils steuerkolbenseitig in Endlagenposition sind. Zwischen deren einander zugewandten Stirnseiten wirkt eine Rückstellfeder 3.

Die Erfindung ist nicht beschränkt auf die vorstehend beschriebenen bevorzugten Ausführungsbeispiele. Es sind auch Abwandlungen hiervon denkbar, die von Schutzbereich der nachfolgenden Ansprüche mit umfasst sind. So ist es beispielsweise auch möglich, im Rahmen des modulartigen Schieberventils anstelle der Ventilschieberteile in Lang- und Kurzbauweise nur eine einzige Länge zu verwenden und die jeweilige Ventilfunktion über einen mehr oder weniger langen Anschlagabschnitt am Enddeckel umzusetzen.

### Bezugszeichenliste

- 1: Einheitsventilgehäuse
- 2: Ventilschieberteil
- 3: Rückstellfeder
- 4: Steuerkolbendichtung
- 5: Schieberdichtung
- 6: Sitzventil
- 7: Enddeckel
- 8: Endanschlagabschnitt
- 9: Durchlassring
- 10: Verbindungselement

## Patentansprüche

1. Modulares pneumatisches Schieberventil mit mehren an einem Einheitsventilgehäuse (1) angeordneten äußeren Anschlüssen P, A, B, R, S, deren Druckluftverbindungen eine innenliegende über mindestens einen stirnseitigen Steuerdruckkolben (2a, 2b) axial bewegbare Ventilschieberanordnung schaltet,
**dadurch gekennzeichnet, dass** zur Realisierung unterschiedlicher Ventilfunktionen die Ventilschieberanordnung aus zwei einzelnen Ventilschieberteilen (2a, 2b) besteht, die miteinander ungekoppelt 2x3/2- sowie 5/3-Ventilfunktionen umsetzen, wobei durch Kopplung mittels eines starren Verbindungselements (10) die beiden Ventilschieberteile (2a, 2b) 5/2-Ventilfunktionen umsetzen.

2. Modulares pneumatisches Schieberventil nach Anspruch 1,
**dadurch gekennzeichnet, dass** das starre Verbindungselement (9) koaxial zu den beiden Ventilschieberteilen (2a, 2b) und lösbar zwischen deren einander zugewandten Stirnseiten angeordnet ist.

3. Modulares pneumatisches Schieberventil nach Anspruch 1,
**dadurch gekennzeichnet, dass** zur Realisierung einer 2x3/2 NC/NC Ventilfunktion zwei Ventilschieberteile (2a, 2b) in Langbauweise jeweils steuerkolbenseitig während der Ruhelage in Endlagenposition sind, wozu zwischen deren einander zugewandten Stirnseiten eine Rückstellfeder (3) angeordnet ist.

4. Modulares pneumatisches Schieberventil nach Anspruch 1,
**dadurch gekennzeichnet, dass** zur Realisierung einer 2x3/2 NO/NO Ventilfunktion zwei Ventilschieberteile (2a', 2b') in Kurzbauweise jeweils steuerkolbenseitig während der Ruhelage in Endlagenposition sind, wozu zwischen deren einander zugewandten Stirnseiten eine Rückstellfeder (3) angeordnet ist.

5. Modulares pneumatisches Schieberventil nach Anspruch 1,
**dadurch gekennzeichnet, dass** zur Realisierung einer 5/2 monostabil Ventilfunktion die beiden Ventilschieberteile (2a', 2b') über das starre Verbindungselement (10) miteinander gekoppelt sind, wobei steuerkolbenseitig eine Rückstellfeder (3) angeordnet ist.

6. Modulares pneumatisches Schieberventil nach Anspruch 1,
**dadurch gekennzeichnet, dass** zur Realisierung einer 5/2 bistabil Ventilfunktion die beiden Ventilschieberteile (2a', 2b') über das starre Verbindungselement (10') miteinander gekoppelt sind.

7. Modulares pneumatisches Schieberventil nach Anspruch 1,
**dadurch gekennzeichnet, dass** zur Realisierung einer 5/3 Ventilfunktion mit Entlüftung in Schiebermittelstellung zwei Ventilschieberteile (2a, 2b) in Langbauweise jeweils steuerkolbenseitig während der Ruhelage in Endlagenposition sind, wozu zwischen deren einander zugewandten Stirnseiten eine Rückstellfeder (3) angeordnet ist.

8. Modulares pneumatisches Schieberventil nach Anspruch 1,
**dadurch gekennzeichnet, dass** zur Realisierung einer 5/3 Ventilfunktion mit Belüftung in Schiebermittelstellung zwei Ventilschieberteile (2a', 2b') in Kurzbauweise jeweils steuerkolbenseitig während der Ruhelage in Endlagenposition sind, wozu zwischen deren einander zugewandten Stirnseiten eine Rückstellfeder (3) angeordnet ist.

9. Modulares pneumatisches Schieberventil nach Anspruch 1,
**dadurch gekennzeichnet, dass** das Verbindungselement (10') mach Art einer Verbindungshülse ausgebildet ist, die auf korrespondierende Endabsätze seitens der Ventilschieberteile (2a, 2b) aufgesteckt ist.

10. Modulares pneumatisches Schieberventil nach Anspruch 1,
**dadurch gekennzeichnet, dass** das Verbindungselement (10) mach Art eines Verbindungsstifts ausgebildet ist, der in korrespondierende Grundbohrungen seitens der Ventilschieberteile (2a, 2b) eingesteckt ist.

11. Modulares pneumatisches Schieberventil nach einem der vorstehenden Ansprüche,
**dadurch gekennzeichnet, dass** beide Ventilschieberteile (2a, 2b) je über nur zwei Kontaktstellen innerhalb des Einheitsgehäuses (1) geführt sind, nämlich steuerkolbenseitig über eine Steuerkolbendichtung (4) und am gegenüberliegenden Ende über eine Schieberdichtung (5).

12. Modulares pneumatisches Schieberventil nach einem der vorstehenden Ansprüche,
**dadurch gekennzeichnet, dass** zum Schalten des Druckluftflusses zwischen den äußeren Anschlüssen A>R bzw. B>S die Ventilschieberteile (2a, 2b) mit dem Einheitsgehäuse (1) je ein Sitzventil (6) bilden.

13. Modulares pneumatisches Schieberventil nach Anspruch 12,
**dadurch gekennzeichnet, dass** die Sitzventile (6) zur Abstimmung auf eine 2x3/2 NO/NO oder 5/3 Mittelstellung belüftet Ventilfunktion mit einem Durchlassring (9) bestückbar sind.

14. Modulares pneumatisches Schieberventil nach einem der vorstehenden Ansprüche,
**dadurch gekennzeichnet, dass** das Einheitsventilgehäuse (1) über stirnseitige Enddeckel (7) verschließbar ist, an welchen innenseitig ein auf die jeweilige Ventilfunktion abgestimmter Endanschlagabschnitt (8) angeformt ist, der mit je einem zugeordneten Ventilschieberteil (2a, 2b) steuerkolbenseitig zusammenwirkt.
